# EUROPEAN PATENT APPLICATION

(11) **EP 4 503 838 A1**
(43) Date of publication of application: **05.02.2025**
(21) Application number: 23778452.5
(22) Date of filing: 31.03.2023
(51) Int. Cl.: H04W 76/10

(54) **METHOD FOR INITIATING BSC LINK ESTABLISHMENT, TERMINAL, AND NETWORK SIDE DEVICE**

(30) Priority: 31.03.2022 CN 202210346240
(71) Applicant: Vivo Mobile Communication Co., Ltd., Dongguan, Guangdong 523863 (CN)
(72) Inventor: LIU, Xuanbing, Dongguan, Guangdong 523863 (CN)
(74) Representative: Murgitroyd & Company
(86) International application number: PCT/CN2023/085454
(87) International publication number: WO 2023/186088

(57) **Abstract**

This application discloses a method for initiating BSC link establishment, a terminal, and a network side device, which relate to the technical field of communications. The method for initiating BSC link establishment in the embodiments of this application includes: sending, by the first device, a first request to the network side device, where the first request is used for initiating BSC link establishment.

## Description

### CROSS-REFERENCE TO RELATED APPLICATION

This application claims the priority of Chinese patent application No. 202210346240.1, filed on March 31, 2022, entitled "METHOD FOR INITIATING BSC LINK ESTABLISHMENT, TERMINAL, AND NETWORK SIDE DEVICE", which is incorporated herein by reference in its entirety.

### TECHNICAL FIELD

This application relates to the technical field of communications, and specifically, to a method for initiating BSC link establishment, a terminal, and a network side device.

### BACKGROUND

Backscatter communication (Backscatter Communications, BSC) refers to that a backscatter communication device transmits information by performing signal modulation by using a radio frequency signal of another device or in the environment. The backscatter communication device may be an electronic tag (Tag) in a conventional radio frequency communication system, or may be a passive Internet of Things device. A backscatter communication technology is a passive or low-energy technology, and technical features thereof lie in that extremely low power consumption or zero power consumption information transmission can be implemented through completion of transmission of its own signals by changing characteristics of a received ambient radio frequency signal, for example, phase or amplitude information.

In a terminal-assisted backscatter communication system, a terminal may serve as a radio frequency source, forward downlink data, forward uplink data, or the like. In this case, how to initiate BSC link establishment is a problem to be solved by persons skilled in the art.

### SUMMARY

Embodiments of this application provide a method for initiating BSC link establishment, a terminal, and a network side device, which can solve the problem of how to initiate BSC link establishment.

A first aspect provides a method for initiating BSC link establishment, applied to a BSC system. The BSC system includes a first device, a network side device, and a BSC terminal. The method includes:
sending, by the first device, a first request to the network side device, where the first request is used for initiating BSC link establishment.

A second aspect provides a method for initiating BSC link establishment, applied to a BSC system. The BSC system includes a first device, a network side device, and a BSC terminal. The method includes:
receiving, by the network side device, a first request sent by the first device, where the first request is used for initiating BSC link establishment.

A third aspect provides a method for initiating BSC link establishment, applied to the BSC system. The BSC system includes a first device, a network side device, and a BSC terminal. The method includes:
sending, by the BSC terminal, a second request to the first device, where the second request is used for the BSC terminal to request to initiate the BSC link establishment.

A fourth aspect provides an apparatus for initiating BSC link establishment. The apparatus includes:
a sending module, configured to send a first request to a network side device, where the first request is used for initiating BSC link establishment.

A fifth aspect provides an apparatus for initiating BSC link establishment. The apparatus includes:
a receiving module, configured to receive a first request sent by a first device, where the first request is used for initiating BSC link establishment.

A sixth aspect provides an apparatus for initiating BSC link establishment. The apparatus includes:
a sending module, configured to send a second request to a first device, where the second request is used for requesting to initiate BSC link establishment.

A seventh aspect provides a first device, including a processor and a memory. The memory stores programs or instructions executable on the processor. When the programs or instructions are executed by the processor, the steps of the method according to the first aspect are implemented.

An eighth aspect provides a first device, including a processor and a communications interface. The communications interface is configured to send a first request to a network side device, where the first request is used for initiating BSC link establishment.

A ninth aspect provides a network side device. The network side device includes a processor and a memory. The memory stores programs or instructions executable on the processor. When the programs or instructions are executed by the processor, the steps of the method according to the second aspect are implemented.

A tenth aspect provides a network side device, including a processor and a communications interface. The communications interface is configured to receive a first request sent by a first device, where the first request is used for initiating BSC link establishment.

An eleventh aspect provides a BSC terminal. The BSC terminal includes a processor and a memory. The memory stores programs or instructions executable on the processor. When the programs or instructions are executed by the processor, the steps of the method according to the third aspect are implemented.

A twelfth aspect provides a BSC terminal, including a processor and a communications interface. The communications interface is configured to send a second request to a first device, where the second request is used for requesting to initiate BSC link establishment.

A thirteenth aspect provides a communication system, including: a first device, network side device, and a BSC terminal. The first device may be configured to perform the steps of the method for initiating BSC link establishment as described in first aspect, the network side device may be configured to perform the steps of the method for initiating BSC link establishment as described in second aspect, and the BSC terminal may be configured to perform the steps of the method for initiating BSC link establishment as described in third aspect.

A fourteenth aspect provides a readable storage medium. The readable storage medium stores programs or instructions. When the programs or instructions are executed by a processor, the steps of the method for initiating BSC link establishment according to the first aspect, the second aspect, or the third aspect are implemented.

A fifteenth aspect provides a chip. The chip includes a processor and a communications interface. The communications interface is coupled to the processor. The processor is configured to run programs or instructions to implement the steps of the method for initiating BSC link establishment according to the first aspect, the second aspect, or the third aspect.

A sixteenth aspect provides a computer program/program product. The computer program/program product is stored in a storage medium. The computer program/program product is executed by at least one processor to implement the steps of the method for initiating BSC link establishment according to the first aspect, the second aspect, or the third aspect.

In the embodiments of this application, the first request is used for initiating BSC link establishment, and the first device can initiate transmission of BSC data by sending the first request to the network side device. Therefore, the foregoing solution solves the problem of how to initiate BSC link establishment, the implementation process thereof is simple, and the implementation complexity of the device is low.

### BRIEF DESCRIPTION OF THE DRAWINGS

FIG. 1 is a structural diagram of a wireless communication system applicable to an embodiment of this application;
FIG. 2 is a schematic diagram of principles of backscatter communication according to an embodiment of this application;
FIG. 3 is a schematic diagram of an MBCS according to an embodiment of this application;
FIG. 4 is a schematic diagram of an BBCS according to an embodiment of this application;
FIG. 5 is a first schematic diagram of a backscatter communication cellular networking architecture according to an embodiment of this application;
FIG. 6 is a second schematic diagram of a backscatter communication cellular networking architecture according to an embodiment of this application;
FIG. 7 is a third schematic diagram of a backscatter communication cellular networking architecture according to an embodiment of this application;
FIG. 8 is a fourth schematic diagram of a backscatter communication cellular networking architecture according to an embodiment of this application;
FIG. 9 is a fifth schematic diagram of a backscatter communication cellular networking architecture according to an embodiment of this application;
FIG. 10 is a sixth schematic diagram of a backscatter communication cellular networking architecture according to an embodiment of this application;
FIG. 11 is a seventh schematic diagram of a backscatter communication cellular networking architecture according to an embodiment of this application;
FIG. 12 is a first schematic flowchart of a method for initiating BSC link establishment according to an embodiment of this application;
FIG. 13 is a second schematic flowchart of a method for initiating BSC link establishment according to an embodiment of this application;
FIG. 14 is a third schematic flowchart of a method for initiating BSC link establishment according to an embodiment of this application;
FIG. 15 is a first schematic structural diagram of an apparatus for initiating BSC link establishment according to an embodiment of this application;
FIG. 16 is a second schematic structural diagram of an apparatus for initiating BSC link establishment according to an embodiment of this application;
FIG. 17 is a third schematic structural diagram of an apparatus for initiating BSC link establishment according to an embodiment of this application;
FIG. 18 is a schematic structural diagram of a communication device according to an embodiment of this application;
FIG. 19 is a schematic diagram of a hardware structure of a terminal according to an embodiment of this application; and
FIG. 20 is a schematic structural diagram of a network side device according to an embodiment of this application.

### DETAILED DESCRIPTION

The technical solutions in embodiments of this application are clearly and completely described in the following with reference to the accompanying drawings in the embodiments of this application. Apparently, the described embodiments are merely some rather than all of the embodiments of this application. All other embodiments obtained by persons skilled in the art based on the embodiments of this application fall within the protection scope of this application.

The specification and claims of this application, and terms "first" and "second" are used to distinguish similar objects, but are unnecessarily used to describe a specific sequence or order. It is to be understood that the terms used in this case is exchangeable in a proper case, so that the embodiments of this application described herein can be implemented in an order different from the order shown or described herein, and in addition, the objects distinguished by "first" and "second" are generally one type, and the number of the objects is not limited, for example, there may be one first object, or a plurality of first objects. In addition, "and/or" in this specification and the claims indicates at least one of the connected objects, and the character "/" in this specification generally indicates an "or" relationship between the associated objects.

It is worth pointing out that the technologies described in the embodiments of this application are not limited to a long term evolution (Long Term Evolution, LTE)/LTE-advanced (LTE-Advanced, LTE-A) system, and may further be applied to various wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems. The terms "system" and "network" in the embodiments of this application are often used interchangeably. The technology described in this application can be applied to the systems and radio technologies mentioned above, and can also be applied to other systems and radio technologies. The following description describes a new radio (New Radio, NR) system for example purposes, and uses NR terminology in most of the following description, although these technologies can also be applied to applications other than NR system applications, such as a 6^{th} generation (6^{th} Generation, 6G) communication system.

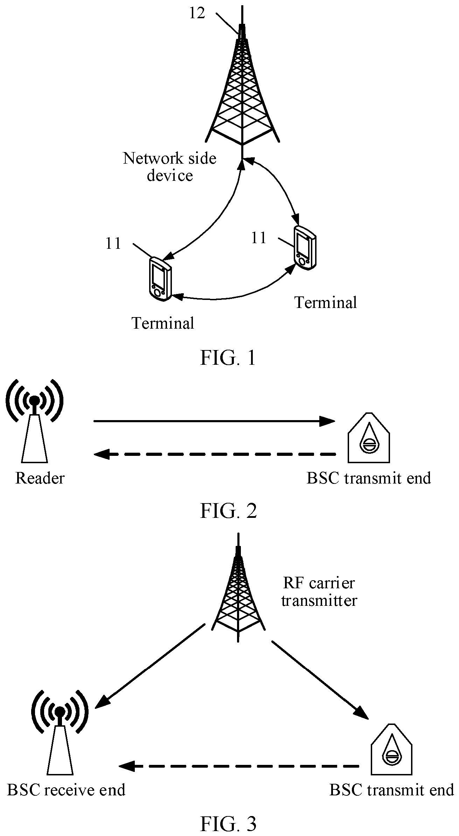

FIG. 1 is a block diagram of an applicable wireless communication system according to an embodiment of this application. The wireless communication system includes a terminal 11 and a network side device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality(virtual reality, VR) device, a robot, a wearable device (Wearable Device), or vehicle user equipment (VUE), pedestrian user equipment (PUE), intelligent homes (home devices having a wireless communication function, such as a refrigerator, a TV set, a washing machine, or furniture), a game console, a personal computer (personal computer, PC), an automatic teller machine, or a self feeder. The wearable device includes: a smartwatch, a smart bracelet, a smart headphone, smart glasses, smart jewelry (such as a smart bracelet, a smart bracelet chain, a smart ring, a smart necklace, a smart anklet, or a smart bracelet chain), a smart wristband, smart clothing, or the like. It should be noted that, the specific type of the terminal 11 is not limited in the embodiments of this application. The network side device 12 may include an access network device or a core network device. The access network device 12 may alternatively be referred to as a radio access network device, a radio access network (Radio Access Network, RAN), a radio access network function, or a radio access network unit. The access network device 12 may include a base station, a WLAN access point, a WiFi node, or the like. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home B node, a home evolved B node, a transmitting receiving point (Transmitting Receiving Point, TRP) or some other appropriate term in the field, as long as the same technical effect is achieved, and the base station is not limited to a specific technical term. It should be noted that, only an NR system is used as an example in the embodiments of this application, but a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (User Plane Function, PCF), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that, only a core network device in an NR system is used as an example in the embodiments of this application, but a specific type of the core network device is not limited.

The method of the embodiments of this application can be applied to a backscatter communication terminal, for example, including a tag (Tag) in conventional radio frequency identification (Radio Frequency Identification, RFID), an Internet of Things (Internet of Things, IoT) device, or an independent RIS unit in an intelligent metasurface. For convenience, in the embodiments of this application, the terminal is collectively referred to as a BSC terminal.

Backscatter communication refers to that a backscatter communication device transmits its own information by performing signal modulation by using a radio frequency signal of another device or in the environment.

The backscatter communication can be architecturally divided into monostatic backscatter communication systems (Monostatic backscatter communicaiton systems, MBCSs), bistatic backscatter communication systems (Bistatic backscatter communicaiton systems, BBCSs), and ambient backscatter communication systems (Ambient backscatter communication systems, ABCSs).

FIG. 2 shows an MBCS. For example, a conventional RFID system is a typical MBCS. The system includes a BSC transmitter (for example, a tag) and a reader Reader. The reader Reader includes an RF radio frequency source and a BSC receive end. The RF radio frequency source is configured to generate an RF radio frequency signal, to supply power to the BSC transmit end/Tag. The BSC transmit end backscatters a modulated RF radio frequency signal, and the BSC receive end in the Reader performs signal demodulation after receiving the backscattered signal. The RF radio frequency source and the BSC receive end are in a same device, for example, the Reader here, and therefore, the system becomes a monostatic backscatter communication system. In the MBCSs systems, an RF radio frequency signal sent from the BSC transmit end goes through a double far-near effect caused by signal attenuation of a round-trip signal, energy attenuation of the signal is large, and therefore an MBCS system is generally used for short-distance backscatter communication, such as a conventional RFID application.

Unlike the MBCS system, an RF radio frequency source and a BSC receive end in a BBCS system are separated. FIG. 3 shows a schematic diagram of the BBCS system. Therefore, by using the BBCS, the problem of large round-trip signal attenuation is avoided, and performance of the BBCS communication system can be further improved by reasonably arranging the position of the RF radio frequency source. Like the BBCS system, an RF radio frequency source and a BSC receive end in an ABCS system are also separated, but unlike the BBCS system in which the radio frequency source is a dedicated signal radio frequency source, and a radio frequency source in the ABCS system may be an available ambient radio frequency source, such as: a TV tower, a cellular base station, a WiFi signal, or a Bluetooth signal.

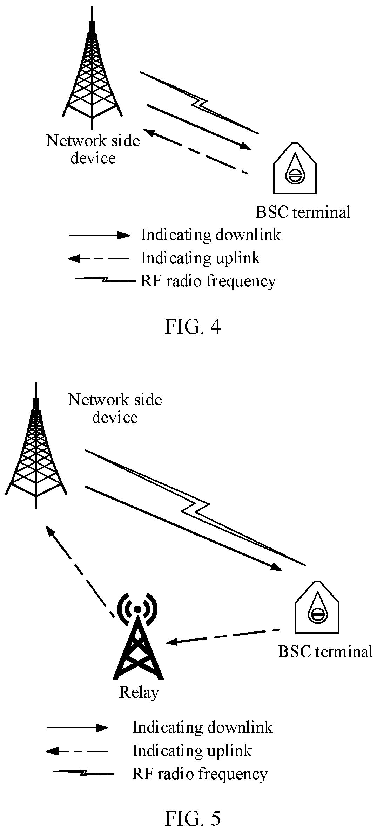

If backscatter communication terminal devices are deployed in a large-scale cellular, the backscatter communication cellular networking architectures may be specifically grouped into eight types of architectures as shown in FIG. 4 to FIG. 11 based on differences in radio frequency sources, uplink data transmission, and downlink data transmission.

In an architecture 1 shown in FIG. 4, in this case, the network side device is a radio frequency source, and is also a downlink data transmit end of a BSC terminal and an uplink data receive end of the BSC terminal. That is, in this case, the network side device directly communicates with the BSC terminal. Such the deployment architecture has high requirements on receiving sensitivities of the network side device and the BSC terminal, but the architecture deployment is simple.

In an architecture 2 shown in FIG. 5, the network side device is similarly a radio frequency source, but in this case, there is a Helper or a Relay, configured to relay uplink data of the BSC terminal to the network side device; certainly, the Helper or the Relay may alternatively relay downlink data from the network side device to the BSC terminal, which is not enumerated herein.

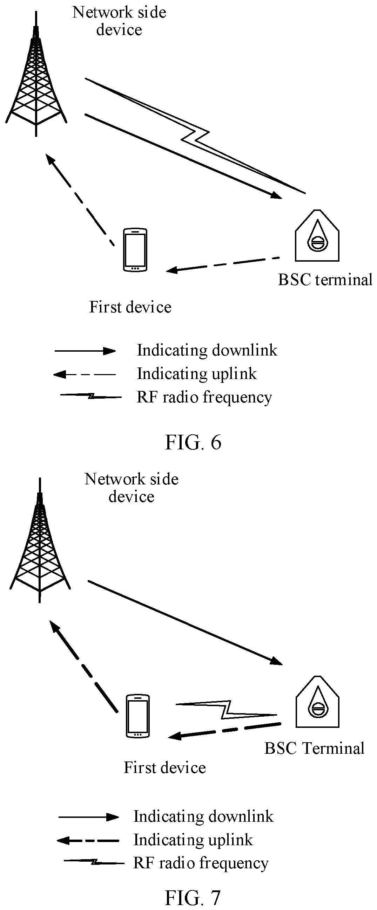

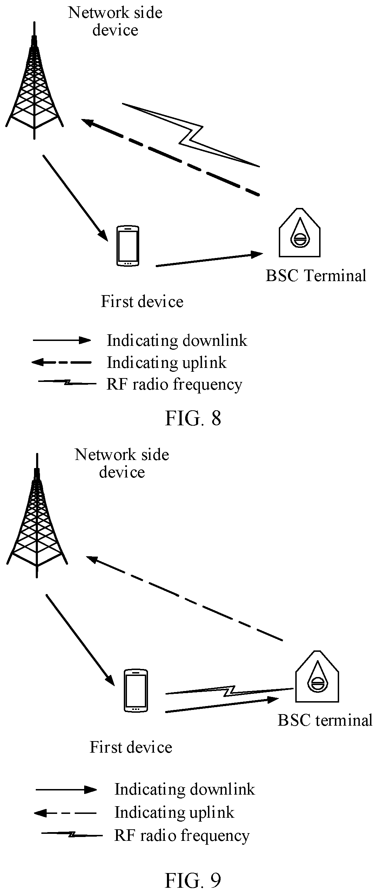

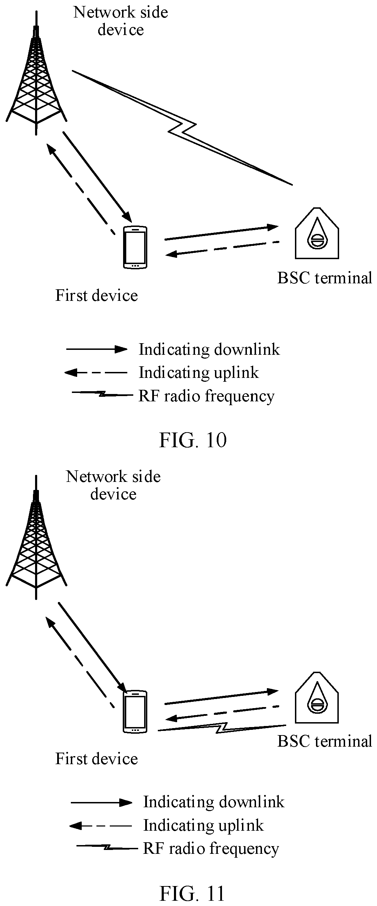

In architectures shown in FIG. 6 to FIG. 11, the first device serves as a radio frequency source, forwards downlink data, forwards uplink data, or the like. In an architecture 3-1a shown in FIG. 6, the network side device is a radio frequency source, and the network side device directly transmits downlink data to the BSC terminal; and in uplink transmission, the BSC terminal first backscatters data to the first device, and then the first device forwards the data to the network side device. In an architecture 3-1b shown in FIG. 7, the first device is a radio frequency source, and the network side device directly transmits downlink data to the BSC terminal; and in uplink transmission, the BSC terminal first backscatters data to the first device, and then the first device forwards the data to the network side device. In an architecture 3-2a shown in FIG. 8, the network side device is a radio frequency source, and downlink data is first sent by the network side device to the first device, and then forwarded by the first device to the BSC terminal; and in uplink transmission, the BSC terminal directly and reversely transmits a signal to the network side device. In an architecture 3-2b shown in FIG. 9, the radio frequency source is the first device, the downlink data is sent by the network side device to the first device, and then forwarded by the first device to the BSC terminal; and in uplink transmission, the BSC terminal directly and reversely transmits a signal to the network side device. In an architecture 3-3a shown in FIG. 10, the radio frequency source is the network side device, and the downlink data is first sent by the network side device to the first device, and then forwarded by the first device to the BSC terminal; and in uplink transmission, the BSC terminal first backscatters data to the first device, and then the first device forwards the data to the network side device. In an architecture 3-3b shown in FIG. 11, the radio frequency source is the first device, the downlink data is sent by the network side device to the first device, and then forwarded by the first device to the BSC terminal; and in uplink transmission, the BSC terminal first backscatters data to the first device, and then the first device forwards the data to the network side device.

The first device may be a regular terminal (or a common terminal) or a relay, or the like. The regular terminal may be a terminal, for example, a current mobile phone, vehicle user equipment, or customer premise equipment (Customer Premise Equipment, CPE).

The method for initiating BSC link establishment provided in the embodiments of this application are described in further detail in the following with reference to the accompanying drawings through some embodiments and application scenarios thereof.

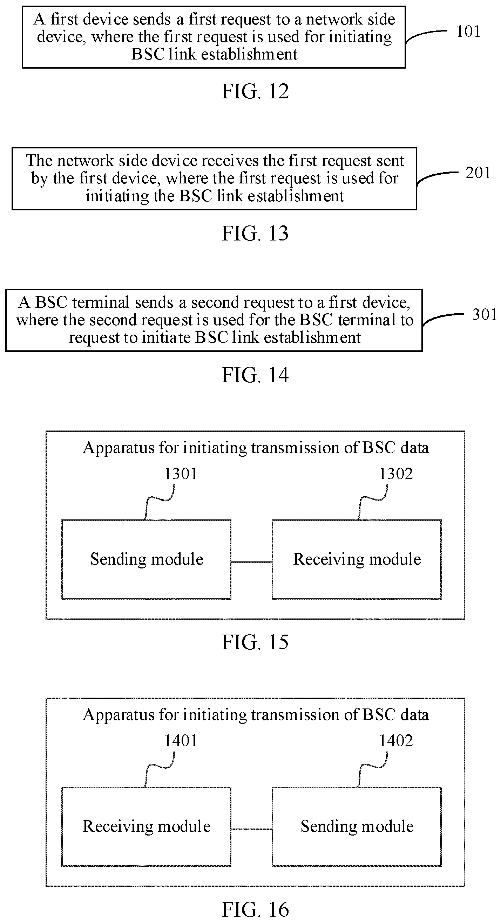

FIG. 12 is a first schematic flowchart of a method for initiating BSC link establishment according to an embodiment of this application. As shown in FIG. 12, the method provided in this embodiment includes:
Step 101: A first device sends a first request to a network side device. The first request is used for initiating BSC link establishment.

Specifically, when the first request includes or carries information for initiating BSC link establishment, or the first request instructs to initiate BSC link establishment, for example, when the first request carries request information for RRC establishment and/or BSC data, the first device can initiate transmission of BSC data by sending the first request to the network side device. The first device may be a regular terminal (or a common terminal) or a relay, or the like. The regular terminal may be a terminal, for example, a current mobile phone, vehicle user equipment, or customer premise equipment (Customer Premise Equipment, CPE).

For example, in the backscatter communication architectural diagrams shown in FIG. 6 to FIG. 11, the first device sends a first request to a network side device at a receive end of the backscatter communication. Optionally, when the first device is in a connected state and the first request includes BSC data, the first device may initiate transmission of the BSC data by sending the first request. The foregoing solution can be applied to multiple UE-assisted backscatter communication networking architectures, and the BSC data may be forwarded by the first device, so that a BSC terminal can transmit the BSC data by transmitting at a relatively small power, thereby reducing the power consumption of the BSC terminal.

In the method in this embodiment, when the first request includes or carries information about initiating BSC link establishment, or when the first request instructs to initiate BSC link establishment, the first device can initiate transmission of the BSC data by sending the first request to the network side device, that is, the first device can initiate BSC link establishment based on the first request. The foregoing solution solves the problem of how to initiate BSC link establishment, the implementation process thereof is simple, and the implementation complexity of the device is relatively low.

Optionally, in a case that the first device is in an idle state, the first request is an RRC connection establishment request message;
in a case that the first device is in an inactive state, the first request is an RRC resume request message; or
in a case that the first device is in a connected state, the first request is a first BSC message.

Specifically, in a case that the terminal is in a different state, the first request for requesting to initiate BSC link establishment may be implemented by using a different message. Optionally, in a case that the first device is in an idle state, the first request is an RRC connection establishment request message, that is, the first device in an idle state needs to establish an RRC connection with the network side device, in order to perform transmission of the BSC data; or in a case that the first device is in an inactive state, the first request is an RRC resume request message, that is, in a case that the first device is in an inactive state, transmission of the BSC data can be performed only by resuming an RRC connection.

Optionally, the first BSC message includes at least one of the following:
a BSC link establishment request, and an uplink information transmission message.

That is, in a case that the first device is in a connected state, when the first device needs to perform transmission of BSC data with the network side device, a BSC link may be established with the network side device by using a BSC link establishment request information, and/or the transmission of the BSC data may be directly performed by using an uplink information transmission message.

In the method of this embodiment, when the first device is in a different state, a different first request may be sent, to initiate the transmission of the BSC data. By the foregoing solution, a requirement for initiating BSC link establishment in different scenarios can be implemented, thereby having an enhanced practicability and a relatively large flexibility.

Optionally, before the first device sends the first request to the network side device, the method further includes:
receiving, by the first device, a second request sent by the BSC terminal. The second request is used for the BSC terminal to request to initiate the BSC link establishment.

Specifically, after the BSC terminal sends the second request for requesting to initiate the BSC link establishment to the first device, the first device sends, based on the received second request, the first request for requesting to initiate the BSC link establishment to the network side device. That is, the BSC terminal may similarly initiate BSC link establishment, thereby having a relatively high flexibility.

In the method of this embodiment, after the BSC terminal sends the second request for requesting to initiate the BSC link establishment to the first device, the first device sends, based on the received second request, the first request for requesting to initiate the BSC link establishment to the network side device. That is, the first device may directly initiate the BSC link establishment, or may initiate the BSC link establishment based on the second request sent by the BSC terminal, thereby having a relatively large flexibility.

Optionally, the first device receives configuration information sent by the network side device; and
the first device establishes an RRC connection or establishes a BSC link with the network side device based on the configuration information.

Specifically, the network side device sends the configuration information to the first device based on the received first request sent by the first device. Optionally, the configuration information is used in establishment of the RRC connection between the first device and the network side device, or is used for indicating resource information available for the BSC link to the first device. The first device receives the configuration information sent by the network side, and can establish the RRC connection or the BSC link with the network side device based on the configuration information.

For example, after receiving the first request sent by the first device for initiating the BSC link establishment, the network side device sends configuration information to the first device. The configuration information includes resource information available to the network side device. After receiving the configuration information sent by the network side device, the first device can establish the RRC connection or establish the BSC link based on the resource information available to the network side device in the configuration information, and perform the transmission of the BSC data.

In the method of this embodiment, after receiving the first request sent by the first device, the network side device may send the configuration information to the first device, to implement information exchange with the first device. Further, the first device can normally interact with the network side based on the configuration information, that is, establishment of the RRC connection or establishment of the BSC link with the network side device is implemented, to start the transmission of the BSC data. By the foregoing solution, information exchange with the first device is implemented based on the configuration information sent by the network side device, the implementation process is simple, and the efficiency is high.

Optionally, the first device receives the BSC data sent by the BSC terminal and forwards the BSC data to the network side device in the connected state; and/or,
the first device receives the BSC data sent by the network side device and forwards the BSC data to the BSC terminal in the connected state.

Specifically, in the backscatter communication architectural diagram shown in FIG. 10, in a backscatter communication process, the first device may receive BSC data sent by the BSC terminal and forward the BSC data to the network side device in the connected state; and/or, the first device receives the BSC data sent by the network side device and forwards the BSC data to the BSC terminal in the connected state. Correspondingly, the network side device may receive BSC data of the BSC terminal forwarded by the first device; and/or, the network side device sends BSC data to the first device or the BSC terminal; or, the network side device receives BSC data sent by the first device or the BSC terminal. That is, the network side device may directly perform the transmission of the BSC data with the BSC terminal, or may perform forwarding of the BSC data by using the first device, to implement data transmission with the BSC terminal, thereby having a relatively high flexibility. Correspondingly, the BSC terminal may send BSC data to the first device or the network side device; and/or, the BSC terminal receives BSC data sent by the first device or the network side device. That is, the BSC terminal may directly perform the transmission of the BSC data with the network side device, or may perform forwarding of the BSC data by using the first device, to implement data transmission with the network side device, thereby having a relatively high flexibility.

In the method of this embodiment, the forwarding of the BSC data is implemented by using the first device, so that the problem that an RF radio frequency signal directly sent from the BSC transmit end goes through a double far-near effect caused by signal attenuation of a round-trip signal, thereby avoiding the problem of large round-trip signal attenuation, increasing the backscatter communication distance, and reducing the power consumption of the BSC terminal.

Optionally, the first device receives a first BSC response message sent by the network side device, where the first BSC response message is used for responding to the first BSC message.

Specifically, after the first device sends the first request to the network side device, the network side device may send a first BSC response message to the first device to indicate that the network side device has received the request sent by the first device. That is, that the network side device sends the first BSC response message to the first device indicates that a communication connection has been established with the first device. That is, after receiving the first BSC response message sent by the network side, the first device can perform normal data transmission with the network side device.

Optionally, in a case that the first device sends the first BSC message or receives the first BSC response message, the first device sends BSC data to the network side device.

Specifically, after the first device sends a first BSC message or receives a first BSC response message, the first device sends BSC data to the network side device. That is, the first device may start to perform transmission of the BSC data with the network side device in different scenarios, so that the flexibility is relatively high, the implementation is simple, and the practicability is enhanced.

Optionally, the first device is a radio frequency source; and the first device starts to supply power to the BSC terminal in any one of the following cases:
in a case that the first device is in a connected state;
in a case that the first device sends a first BSC message or receives a first BSC response message; or
before the first device sends the first request to the network side device.

Specifically, in the backscatter communication architectural diagrams shown in FIG. 7, FIG. 9, and FIG. 11, in a backscatter communication process, the first device may serve as a radio frequency source, to supply power to the BSC terminal. Optionally, the first device may start to supply power to the BSC terminal in a connected state, or after sending the first BSC message or receiving the first BSC response message, or before sending the first request to the network side device. That is, the first device may select a better way to supply power to the BSC terminal based on a backscatter communication requirement, so as to achieve an effect of reducing the power consumption of the first device. Similarly, in the backscatter communication architectural diagrams shown in FIG. 6, FIG. 8, and FIG. 10, the network side device may alternatively supply power to the BSC terminal. Optionally, the network side device may supply power to the BSC terminal after receiving the first BSC message sent by the first device or receiving the first request sent by the first device. That is, the BSC terminal may be powered by the first device, or may be powered by the network side device.

By the method in this embodiment, the first device may supply power to the BSC terminal in different scenarios, flexibility is relatively high and practicability is enhanced.

Optionally, the first request includes at least one of the following:
indication information for initiating BSC link establishment;
indication information for BSC uplink establishment or indication information for BSC downlink establishment;
indication information for BSC uplink data forwarding or indication information for BSC downlink data forwarding;
BSC data;
data Mo-Data initiated by the first device;
indication information of first device-assisted data transmission; and
indication information for multimedia priority service (Multimedia Priority Service, Mps) priority access (Priority Access).

Specifically, the first request may include a request cause, where the information included in the first request may be carried through a request cause field. after receiving the first request, the network side device can determine, based on the specific information carried in the first request, how to connect and communicate with the first device, so that communication between the first device and the network side device is more targeted and more efficient.

For example, as shown in FIG. 6, the network side device is a radio frequency source, and the network side device directly transmits downlink data to the BSC terminal; and in uplink transmission, the BSC terminal first sends data to the first device in a backscatter manner, and then the first device forwards the data to the network side device, that is, the first device establishes an uplink BSC link and/or forwards the data. The first device may initiate BSC link establishment in the following manner, specifically as follows:
Example I: The first device is in an idle state.

The first device sends an RRC connection establishment request message to the network side device, where the RRC connection establishment request message is used for requesting a network to initiate BSC link establishment.

Optionally, an establishment cause in the RRC connection establishment request message includes at least one of the following:
indication information for initiating BSC link establishment;
indication information for BSC uplink establishment or indication information for BSC downlink establishment;
indication information for BSC uplink data forwarding or indication information for BSC downlink data forwarding;
BSC data;
data Mo-Data initiated by the first device;
indication information of first device-assisted data transmission; and
indication information of multimedia priority service priority access.

Optionally, before the first device sends the RRC connection establishment request to the network side device, the first device receives a BSC request message sent by the BSC terminal.

Optionally, the first device receives the configuration message sent by the network side and enters an RRC connected state.

The first device receives the BSC data sent by the BSC terminal and forwards the BSC data to the network in the connected state.

Example II: The first device is in an inactive state.

The first device sends an RRC resume request to the network side device, where the RRC resume request message is used for requesting a network to initiate BSC link establishment.

Optionally, the resume cause in the RRC resume request message includes at least one of the following:
indication information for initiating BSC link establishment;
indication information for BSC uplink establishment or indication information for BSC downlink establishment;
indication information for BSC uplink data forwarding or indication information for BSC downlink data forwarding;
BSC data;
data Mo-Data initiated by the first device;
indication information of first device-assisted data transmission; and
indication information of multimedia priority service priority access.

Optionally, before the first device sends the RRC resume request to the network side device, the first device receives a BSC request message sent by the BSC terminal.

Optionally, the first device receives the configuration message sent by the network side and enters an RRC connected state.

The first device receives the BSC data sent by the BSC terminal and forwards the BSC data to the network in the connected state.

Example III: The first device is in a connected state.

In the connected state, the first device sends a first BSC message to the network side device, where the first BSC message is used for requesting a network to establish a BSC link and/or send BSC data.

Optionally, the first BSC message includes at least one of the following:
a BSC link establishment request; the BSC link establishment request being used for requesting, by the first device, the network side device to establish a BSC link; and
uplink information transmission message (UL Information Transfer): the message including BSC link establishment request information and/or BSC data.

Optionally, before the first device sends the BSC message to the network side device, the first device receives a BSC request message sent by the BSC terminal.

Optionally, the first device receives a BSC response message sent by the network side device, where the BSC response message includes a response or confirmation information for the BSC message by the network.

After the first device sends the BSC message or receives the BSC response message sent by the network side device, the first device
sends BSC data to the network side device.

As shown in FIG. 7, the network side device is a radio frequency source, and the network side device directly transmits downlink data to the BSC terminal; and in uplink transmission, the BSC terminal first sends data to the first device in a backscatter manner, and then the first device forwards the data to the network side device. Optionally, the first device may supply power to the BSC terminal in the following manner, specifically as follows:
Optionally, in a scenario in which the first device is in an idle state or a non-connected state and BSC link establishment is initiated, the first device starts to supply power to the BSC terminal after the first device enters the connected state.
Optionally, in a scenario in which the first device is in a connected state and BSC link establishment is initiated, the first device starts to supply power to the BSC terminal after the first device sends a BSC message or receives a BSC response message sent by the network side device; or the first device starts to supply power to the BSC terminal before the first device initiates BSC link establishment or transmission of the BSC data. In this case, the network side device can start to deliver a BSC command and/or data to the BSC terminal at any time after receiving a message from the first device.

As shown in FIG. 8, the network side device is a radio frequency source, and downlink data is first sent by the network side device to the first device, and then forwarded by the first device to the BSC terminal; and in uplink transmission, the BSC terminal directly and reversely transmits a signal to the network side device. That is, the first device performs forwarding and establishment of downlink BSC data.

As shown in FIG. 9, the radio frequency source is the terminal, the downlink data is first sent by the network side device to the first device, and then forwarded by the first device to the BSC terminal; and in uplink transmission, the BSC terminal directly and reversely transmits a signal to the network side device. Optionally, the first device may supply power to the BSC terminal in the following manner, specifically as follows:
Optionally, in a scenario in which the first device is in an idle state or a non-connected state and BSC link establishment is initiated, the first device starts to supply power to the BSC terminal after the first device enters the connected state.
Optionally, in a scenario in which the first device is in a connected state and BSC link establishment is initiated, the first device starts to supply power to the BSC terminal after the first device sends a BSC message or receives a BSC response message sent by the network side device; or the first device starts to supply power to the BSC terminal before the first device initiates BSC link establishment or transmission of the BSC data.

As shown in FIG. 10, the radio frequency source is the network side device, and the downlink data is first sent by the network side device to the first device, and then forwarded by the first device to the BSC terminal; and in uplink transmission, the BSC terminal first backscatters data to the first device, and then the first device forwards the data to the network side device. That is, the first device performs forwarding and establishment of uplink/downlink BSC data.

Optionally, in a scenario in which the first device is in an idle state or a non-connected state and BSC link establishment is initiated, after the first device enters a connected state, the first device receives the BSC data sent by the network side device and forwards the BSC data to the BSC terminal. The first device receives the BSC data sent by the BSC terminal, and forwards the BSC data to the network side device.

Optionally, in a scenario in which the first device is in a connected state and BSC link establishment is initiated, after the first device sends a BSC message or receives a BSC response message sent by the network side device, the first device receives the BSC data sent by the network side device and forwards the BSC data to the BSC terminal. The first device receives the BSC data sent by the BSC terminal, and forwards the BSC data to the network side device.

As shown in FIG. 11, the radio frequency source is the terminal, the downlink data is first sent by the network side device to the first device, and then forwarded by the first device to the BSC terminal; and in uplink transmission, the BSC terminal first backscatters data to the first device, and then the first device forwards the data to the network side device. Optionally, the first device may supply power to the BSC terminal in the following manner, specifically as follows:
Optionally, in a scenario in which the first device is in an idle state or a non-connected state and BSC link establishment is initiated, the first device starts to supply power to the BSC terminal after the first device enters the connected state.
Optionally, in a scenario in which the first device is in a connected state and BSC link establishment is initiated, the first device starts to supply power to the BSC terminal after the first device sends a BSC message or receives a BSC response message sent by the network side device; or the first device starts to supply power to the BSC terminal before the first device initiates BSC link establishment or transmission of the BSC data.

An execution body of the method for initiating BSC link establishment according to an embodiment of this application may be a virtual apparatus. In this embodiment of this application, for example, the virtual apparatus executes the method for initiating BSC link establishment, to describe an apparatus for initiating BSC link establishment according to an embodiment of this application.

FIG. 13 is a second schematic flowchart of a method for initiating BSC link establishment according to an embodiment of this application. As shown in FIG. 13, the method provided in this embodiment includes:
Step 201: A network side device receives a first request sent by a first device. The first request is used for initiating BSC link establishment.

Optionally, the first request includes at least one of the following:
an RRC connection establishment request message;
an RRC resume request message; and
a first BSC message.

Optionally, after the network side device receives the first request sent by the first device, the method further includes:
sending, by the network side device, configuration information to the first device. The configuration information is used in establishment of an RRC connection or a BSC link between the first device and the network side device.

Optionally, the method further includes:
receiving, by the network side device, BSC data of the BSC terminal forwarded by the first device; or,
sending, by the network side device, BSC data to the first device or the BSC terminal; or,
receiving, by the network side device, BSC data sent by the first device or the BSC terminal.

Optionally, the first BSC message includes at least one of the following:
a BSC link establishment request, and an uplink information transmission message.

Optionally, after the network side device receives the first request sent by the first device, the method further includes:
sending, by the network side device, a first BSC response message to the first device, where the first BSC response message is used for responding to the first BSC message.

Optionally, the network side device supplies power to the BSC terminal.

Optionally, the first request includes at least one of the following:
indication information for initiating BSC link establishment;
indication information for BSC uplink establishment or indication information for BSC downlink establishment;
indication information for BSC uplink data forwarding or indication information for BSC downlink data forwarding;
BSC data;
data Mo-Data initiated by the first device;
indication information of first device-assisted data transmission; and
indication information of multimedia priority service priority access.

FIG. 14 is a third schematic flowchart of a method for initiating BSC link establishment according to an embodiment of this application. As shown in FIG. 14, the method provided in this embodiment includes:
Step 301: A BSC terminal sends a second request to a first device. The second request is used for the BSC terminal to request to initiate the BSC link establishment.

Optionally, the BSC terminal sends BSC data to the first device or a network side device; and/or,
the BSC terminal receives BSC data sent by the first device or a network side device.

Optionally, the BSC terminal is powered by the first device and/or the network side device.

FIG. 15 is a first schematic structural diagram of an apparatus for initiating BSC link establishment according to an embodiment of this application. The apparatus may be applied to a first device. As shown in FIG. 15, the apparatus for initiating BSC link establishment provided in this embodiment includes:

A sending module 1301 is configured to send a first request to a network side device. The first request is used for initiating BSC link establishment.

Optionally, in a case that the first device is in an idle state, the first request is an RRC connection establishment request message;
in a case that the first device is in an inactive state, the first request is an RRC resume request message; or
in a case that the first device is in a connected state, the first request is a first BSC message.

Optionally, a receiving module 1302 is configured to receive a second request sent by a BSC terminal. The second request is used for requesting to initiate BSC link establishment.

Optionally, the receiving module 1302 is further configured to receive configuration information sent by the network side device.

Optionally, the apparatus further includes: a processing module, configured to establish an RRC connection or establish a BSC link with the network side device based on the configuration information.

Optionally, the receiving module 1302 is further configured to receive BSC data sent by the BSC terminal and forward the BSC data to the network side device; and/or, receive BSC data sent by the network side device, and forward the BSC data to the BSC terminal.

Optionally, the first BSC message includes at least one of the following:
a BSC link establishment request, and an uplink information transmission message.

Optionally, the receiving module 1302 is further configured to receive a first BSC response message sent by the network side device, where the first BSC response message is used for responding to the first BSC message.

Optionally, the sending module 1301 is further configured to send BSC data to the network side device in a case that the first device sends a first BSC message or receives a first BSC response message.

Optionally, the apparatus further includes a power supply module, configured to start to supply power to the BSC terminal in any one of the following cases:
in a case that the first device is in a connected state;
in a case that the first device sends a first BSC message or receives a first BSC response message; or
before the first device sends the first request to the network side device.

Optionally, the first request includes at least one of the following:
indication information for initiating BSC link establishment;
indication information for BSC uplink establishment or indication information for BSC downlink establishment;
indication information for BSC uplink data forwarding or indication information for BSC downlink data forwarding;
BSC data;
data Mo-Data initiated by the first device;
indication information of first device-assisted data transmission; and
indication information of multimedia priority service priority access.

The apparatus in this embodiment may be configured to execute the method in any embodiment of the foregoing first device-side method embodiment, and a specific implementation process and technical effects thereof are the same as those in the first device-side method embodiment. For details, reference may be made to the detailed description in the first device-side method embodiment, and details are not described herein again.

FIG. 16 is a second schematic structural diagram of an apparatus for initiating BSC link establishment according to an embodiment of this application. The apparatus may be applied to a network side device. As shown in FIG. 16, the apparatus for initiating BSC link establishment provided in this embodiment includes:

A receiving module 1401 is configured to receive a first request sent by a first device. The first request is used for initiating BSC link establishment.

Optionally, the first request includes at least one of the following:
an RRC connection establishment request message;
an RRC resume request message; and
a first BSC message.

A sending module 1402 is configured to send configuration information to the first device. The configuration information is used in establishment of an RRC connection or a BSC link between the first device and the network side device.

Optionally, the receiving module 1401 is specifically configured to receive BSC data of a BSC terminal forwarded by the first device; or,
receive BSC data sent by the first device or a BSC terminal.

Optionally, the sending module 1402 is specifically configured to send the BSC data to the first device or the BSC terminal.

Optionally, the first BSC message includes at least one of the following:
a BSC link establishment request, and an uplink information transmission message.

Optionally, the sending module 1402 is specifically configured to send a first BSC response message to the first device, where the first BSC response message is used for responding to the first BSC message.

Optionally, the apparatus further includes an power supply module, configured to supply power to the BSC terminal.

Optionally, the first request includes at least one of the following:
indication information for initiating BSC link establishment;
indication information for BSC uplink establishment or indication information for BSC downlink establishment;
indication information for BSC uplink data forwarding or indication information for BSC downlink data forwarding;
BSC data;
data Mo-Data initiated by the first device;
indication information of first device-assisted data transmission; and
indication information of multimedia priority service priority access.

The apparatus in this embodiment may be configured to execute the method in any embodiment of the foregoing network side device-side method embodiment, and a specific implementation process and technical effects thereof are the same as those in the network side device-side method embodiment. For details, reference may be made to the detailed description in the network side device-side method embodiment, and details are not described herein again.

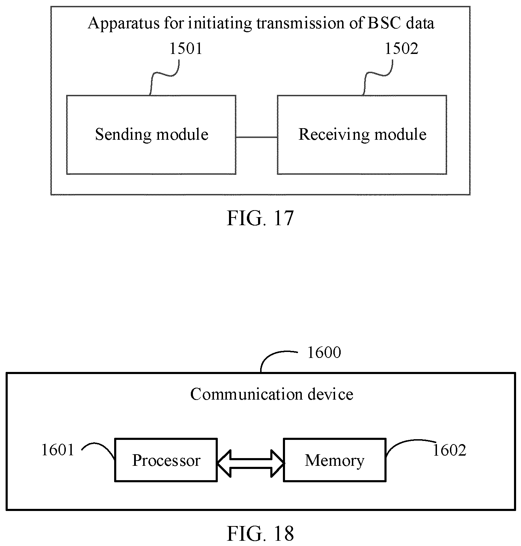

FIG. 17 is a third schematic structural diagram of an apparatus for initiating BSC link establishment according to an embodiment of this application. The apparatus may be applied to a BSC terminal. As shown in FIG. 17, the apparatus for initiating BSC link establishment provided in this embodiment includes:

A sending module 1501 is configured to send a second request to a first device. The second request is used for requesting to initiate BSC link establishment.

Optionally, the sending module 1501 is further configured to send BSC data to the first device or a network side device.

A receiving module 1502 is configured to receive BSC data sent by the first device or the network side device.

Optionally, the apparatus is powered by the first device and/or the network side device.

The apparatus in this embodiment may be configured to execute the method in any embodiment of the foregoing BSC terminal-side method embodiment, and a specific implementation process and technical effects thereof are the same as those in the BSC terminal-side method embodiment. For details, reference may be made to the detailed description in the BSC terminal-side method embodiment, and details are not described herein again.

The apparatus for initiating BSC link establishment in the embodiments of this application may be an electronic device, for example, an electronic device having an operating system, or may be a component in an electronic device, for example, an integrated circuit or a chip. The electronic device may be a terminal, or may be another device except the terminal. For example, the terminal may include, but is not limited to, the types of the terminal 11 listed above, the other devices may be a server, a network attached storage (Network Attached Storage, NAS) or the like, and details are not specifically limited in the embodiments of this application.

The apparatus for initiating BSC link establishment provided in this embodiment of this application can implement each process implemented in the method embodiments shown in FIG. 6 to FIG. 14, and in addition, the same technical effect can be achieved. To avoid repetition, details are not described herein again.

Optionally, as shown in FIG. 18, an embodiment of this application further provides a communication device 1600, including a processor 1601 and a memory 1602. The memory 1602 stores programs or instructions executable on the processor 1601. For example, when the communication device 1600 is a first device, when the programs or instructions are executed by the processor 1601, the steps of the foregoing method for initiating BSC link establishment in the embodiments are implemented. In addition, the same technical effect can be achieved. In a case that the communication device 1600 is a network side device, when the programs or instructions are executed by the processor 1601, the steps of the method for initiating BSC link establishment in the embodiments are implemented. In addition, the same technical effect can be achieved. To avoid repetition, details are not described herein again.

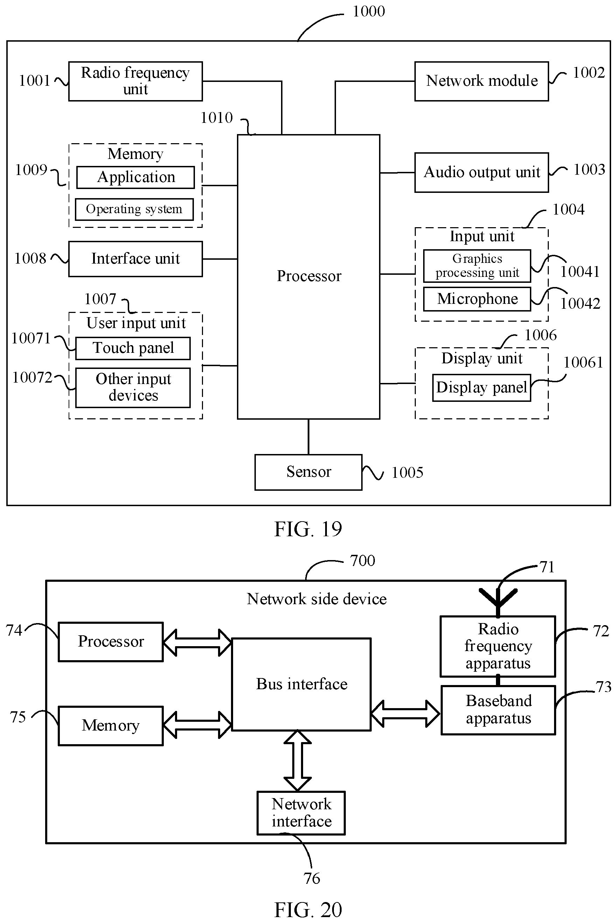

An embodiment of this application further provides a terminal, including a processor and a communications interface. The communications interface is configured to send a first request to a network side device. The first request is used for initiating BSC link establishment. The terminal embodiment corresponds to the first device-side method embodiment, the implementation processes and implementations of the foregoing method embodiments can be applied to the terminal embodiment, and in addition the same technical effect can be achieved. Specifically, FIG. 19 is a schematic diagram of a hardware structure of a terminal for implementing an embodiment of this application.

The terminal 1000 includes, but is not limited to: at least some components in a radio frequency unit 1001, a network module 1002, an audio output unit 1003, an input unit 1004, a sensor 1005, a display unit 1006, a user input unit 1007, an interface unit 1008, a memory 1009, a processor 1010, and the like.

Persons skilled in the art may understand that the terminal 1000 may further include a power supply (such as a battery) for supplying power to the components. The power supply may be logically connected to the processor 1010 by a power management system, thereby implementing functions such as charging, discharging, and power consumption management by using the power management system. The terminal structure shown in FIG. 19 does not constitute a limitation on the terminal, and the terminal may include more or fewer components than shown, or combine some components, or have different component arrangements, and details are not described herein again.

It should be understood that, in this embodiment of this application, the input unit 1004 may include a graphics processing unit (Graphics Processing Unit, GPU) 10041 and a microphone 10042. The graphics processor 10041 processes image data of a still picture or a video obtained by an image capture apparatus (such as a camera) in a video capture mode or an image capture mode. The display unit 1006 may include a display panel 10061, and the display panel 10061 may be configured in the form of a liquid crystal display, an organic light-emitting diode, or the like. The user input unit 1007 includes at least one of a touch panel 10071 and other input devices 10072. The touch panel 10071 is also referred to as a touchscreen. The touch panel 10071 may include two parts: a touch detection apparatus and a touch controller. The another input device 10072 may include, but not limited to, a physical keyboard, a functional key (such as a volume control key or a switch key), a track ball, a mouse, and a joystick, and details are not described herein again.

In this embodiment of this application, after receiving downlink data from the network side device, the radio frequency unit 1001 may transmit the downlink data to the processor 1010 for processing. In addition, the radio frequency unit 1001 may send the uplink data to the network side device. Generally, the radio frequency unit 1001 includes, but is not limited to, an antenna, at least one amplifier, a transceiver, a coupler, a low noise amplifier, a duplexer, and the like.

The memory 1009 may be configured to store software programs or instructions and various pieces of data. The memory 1009 may mainly include a first storage area for storing programs or instructions and a second storage area for storing data. The first storage program or instruction area may store an operating system, application programs or instructions required by at least one function (for example, a sound playback function and an image display function), or the like. In addition, the memory 1009 includes a transitory memory or a non-transitory memory, or the memory 1009 may include both a transitory memory and a non-transitory memory; includes a high-speed random access memory, or may include a non-volatile memory, where the non-volatile memory may be a read-only memory (Read-Only Memory, ROM), a programmable ROM (Programmable ROM, PROM), an erasable programmable read-only memory (Erasable PROM, EPROM), an electrically erasable programmable read-only memory (Electrically EPROM, EEPROM), or a flash memory. The transitory memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1009 in this embodiment of this application includes, but is not limited to, these and any other suitable types of memory, for example, at least one magnetic disk storage device, a flash memory device, or other non-volatile solid-state storage device.

The processor 1010 may include one or more processing units. Optionally, the processor 1010 may integrate an application processor and a modem processor, where the application processor mainly relates to operations such as an operating system, a user interface, or an application program, or instructions, and the modem processor mainly processes radio communications signals, for example, a baseband processor. It may be understood that the foregoing modem processor may not be integrated into the processor 1010.

An embodiment of this application further provides a network side device, including a processor and a communications interface. The communications interface is configured to receive a first request sent by a first device. The first request is used for initiating BSC link establishment.

The network side device embodiment corresponds to the network side device method embodiment, the implementation processes and implementations of the foregoing method embodiments can be applied to the network side device embodiment, and in addition the same technical effect can be achieved.

Specifically, an embodiment of this application further provides a network side device. As shown in FIG. 20, the network side device 700 includes: an antenna 71, a radio frequency device 72, a baseband apparatus 73, a processor 75, and a memory 75. The antenna 71 is connected to the radio frequency device 72. In an uplink direction, the radio frequency apparatus 72 receives information through the antenna 71, and sends the received information to the base-band apparatus 73 for processing. In a downlink direction, the base-band apparatus 73 processes information to be sent and sends the information to the radio frequency apparatus 72, and the radio frequency apparatus 72 processes the received information and sends the information through the antenna 71.

The frequency band processing apparatus may be located in the base-band apparatus 73, the method performed by the network side device in the foregoing embodiments may be implemented in the base-band apparatus 73, and the base-band apparatus 73 includes a baseband processor 75 and a memory 75.

For example, the baseband apparatus 73 may include at least one baseband board, and the baseband board is provided with a plurality of chips. As shown in FIG. 20, one of the chips is, for example, a baseband processor 75, and is connected to the memory 75 through a bus interface, to invoke a program in the memory 75, to perform an operation of a network device shown in the foregoing method embodiments.

A network side device of the baseband apparatus 73 may alternatively include a network interface 76 for information exchange with the radio frequency apparatus 72, and the interface is, for example, a common public radio interface (common public radio interface, CPRI for short).

Specifically, the network side device 700 of this embodiment of the present invention further includes: instructions or a program stored on the memory 75 and capable of being run on the processor 75, where the processor 75 invokes the instructions or the program in the memory 75 to perform the method performed by the modules shown in FIG. 20, and in addition the same technical effect is achieved. To avoid repetition, details are not described herein.

An embodiment of this application further provides a readable storage medium. The readable storage medium stores programs or instructions. The programs or instructions, when executed by a processor, cause the processor to perform the processes of the foregoing method for initiating BSC link establishment in the embodiments, and in addition, the same technical effect can be achieved, which are not repeated herein to avoid duplication.

The processor is the processor in the terminal described in the foregoing embodiment. The readable storage medium includes a computer-readable storage medium, such as a computer read-only memory ROM, a random access memory RAM, a magnetic disk, or an optical disk.

An embodiment of this application further provides a chip. The chip includes a processor and a communications interface. The communications interface is coupled to the processor. The processor is configured to run programs or instructions to implement the processes of the foregoing method for initiating BSC link establishment in the embodiments, and in addition, the same technical effect can be achieved, which are not repeated herein to avoid duplication.

It should be understood that the chip mentioned in this embodiment of this application may alternatively be referred to as a system-grade chip, a system chip, a chip system, or a system-on-chip.

An embodiment of this application further provides a computer program/program product. The computer program/program product is stored in a storage medium. The computer program/program product is executed by at least one processor to implement each process of the foregoing method in the embodiments, and in addition, the same technical effect can be achieved. To avoid repetition, details are not described herein again.

An embodiment of this application further provides a communication system, including: a first device, a network side device, and a BSC terminal. The first device, the network side device, and the BSC terminal can be used for executing the steps of the method for initiating BSC link establishment as described above respectively.

It should be noted that, the terms "include", "comprise", or any other variation thereof in this specification is intended to cover a non-exclusive inclusion, which specifies the presence of stated processes, methods, objects, or apparatuses, but do not preclude the presence or addition of one or more other processes, methods, objects, or apparatuses. Without more limitations, elements defined by the sentence "including one" does not exclude that there are still other same elements in the processes, methods, objects, or apparatuses. In addition, it should be pointed out that the scope of the methods and apparatuses in the embodiments of this application is not limited to performing functions in the order shown or discussed, and may further include performing functions in a substantially simultaneous manner or in a reverse order based on the functions involved, for example, the described methods may be performed in an order different from the order described, and various steps may be added, omitted, or combined. In addition, the features described with reference to some examples can be combined in other examples.

According to the descriptions in the foregoing implementations, persons skilled in the art may clearly learn that the method according to the foregoing embodiment may be implemented by relying on software and a commodity hardware platform or by using hardware. Based on such an understanding, the technical solutions of the present invention essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, an air conditioner, a network device, or the like) to perform the methods described in the embodiments of this application.

The embodiments of this application have been described above with reference to the accompanying drawings. This application is not limited to the specific embodiments described above, and the specific embodiments described above are merely exemplary and not limitative. Those of ordinary skill in the art may make various variations under the teaching of this application without departing from the spirit of this application and the protection scope of the claims, and such variations shall all fall within the protection scope of this application.

## Claims

1. A method for initiating backscatter communication BSC link establishment, wherein the method is applied to a BSC system, the BSC system comprises a first device, a network side device, and a BSC terminal, and the method comprises:
sending, by the first device, a first request to the network side device, wherein the first request is used for initiating BSC link establishment.

2. The method for initiating BSC link establishment according to claim 1, wherein
in a case that the first device is in an idle state, the first request is an RRC connection establishment request message;
in a case that the first device is in an inactive state, the first request is an RRC resume request message; or
in a case that the first device is in a connected state, the first request is a first BSC message.

3. The method for initiating BSC link establishment according to claim 1 or 2, before the sending, by the first device, a first request to the network side device, further comprising:
receiving, by the first device, a second request sent by the BSC terminal, wherein the second request is used for the BSC terminal to request to initiate the BSC link establishment.

4. The method for initiating BSC link establishment according to claim 1 or 2, wherein the method further comprises:
receiving, by the first device, configuration information sent by the network side device; and
establishing, by the first device, an RRC connection or a BSC link with the network side device based on the configuration information.

5. The method for initiating BSC link establishment according to claim 1 or 2, wherein the method further comprises:
receiving, by the first device, BSC data sent by the BSC terminal and forwarding the BSC data to the network side device in a connected state; and/or,
receiving, by the first device, BSC data sent by the network side device and forwarding the BSC data to the BSC terminal in the connected state.

6. The method for initiating BSC link establishment according to claim 2, wherein
the first BSC message comprises at least one of the following:
a BSC link establishment request, and an uplink information transmission message.

7. The method for initiating BSC link establishment according to claim 2, wherein the method further comprises:
receiving, by the first device, a first BSC response message sent by the network side device, wherein the first BSC response message is used for responding to the first BSC message.

8. The method for initiating BSC link establishment according to claim 7, wherein the method further comprises:
in a case that the first device sends the first BSC message or receives the first BSC response message, sending, by the first device, BSC data to the network side device.

9. The method for initiating BSC link establishment according to claim 1, wherein the first device is a radio frequency source; and the first device starts to supply power to the BSC terminal in any one of the following cases:
in a case that the first device is in a connected state;
in a case that the first device sends a first BSC message or receives a first BSC response message; or
before the first device sends the first request to the network side device.

10. The method for initiating BSC link establishment according to claim 1 or 2, wherein
the first request comprises at least one of the following:
indication information for initiating the BSC link establishment;
indication information for BSC uplink establishment or indication information for BSC downlink establishment;
indication information for BSC uplink data forwarding or indication information for BSC downlink data forwarding;
BSC data;
data Mo-Data initiated by the first device;
indication information of first device-assisted data transmission; and
indication information of multimedia priority service priority access.

11. A method for initiating backscatter communication BSC link establishment, wherein the method is applied to a BSC system, the BSC system comprises a first device, a network side device, and a BSC terminal, and the method comprises:
receiving, by the network side device, a first request sent by the first device, wherein the first request is used for initiating BSC link establishment.

12. The method for initiating BSC link establishment according to claim 11, wherein the first request comprises at least one of the following:
an RRC connection establishment request message;
an RRC resume request message; and
a first BSC message.

13. The method for initiating BSC link establishment according to claim 11 or 12, wherein after the receiving, by the network side device, a first request sent by the first device, the method further comprises:
sending, by the network side device, configuration information to the first device, wherein the configuration information is used in establishment of an RRC connection or a BSC link between the first device and the network side device.

14. The method for initiating BSC link establishment according to claim 11 or 12, wherein the method further comprises:
receiving, by the network side device, BSC data of the BSC terminal forwarded by the first device; or,
sending, by the network side device, BSC data to the first device or the BSC terminal; or,
receiving, by the network side device, BSC data sent by the first device or the BSC terminal.

15. The method for initiating BSC link establishment according to claim 12, wherein
the first BSC message comprises at least one of the following:
a BSC link establishment request, and an uplink information transmission message.

16. The method for initiating BSC link establishment according to claim 12, wherein after the receiving, by the network side device, a first request sent by the first device, the method further comprises:
sending, by the network side device, a first BSC response message to the first device, wherein the first BSC response message is used for responding to the first BSC message.

17. The method for initiating BSC link establishment according to claim 11 or 12, wherein the method further comprises:
supplying, by the network side device, power to the BSC terminal.

18. The method for initiating BSC link establishment according to claim 11 or 12, wherein the first request comprises at least one of the following:
indication information for initiating the BSC link establishment;
indication information for BSC uplink establishment or indication information for BSC downlink establishment;
indication information for BSC uplink data forwarding or indication information for BSC downlink data forwarding;
BSC data;
data Mo-Data initiated by the first device;
indication information of first device-assisted data transmission; and
indication information of multimedia priority service priority access.

19. A method for initiating backscatter communication BSC link establishment, wherein the method is applied to a BSC system, the BSC system comprises a first device, a network side device, and a BSC terminal, and the method comprises:
sending, by the BSC terminal, a second request to the first device, wherein the second request is used for the BSC terminal to request to initiate the BSC link establishment.

20. The method for initiating BSC link establishment according to claim 19, wherein the method further comprises:
sending, by the BSC terminal, BSC data to the first device or the network side device; and/or,
receiving, by the BSC terminal, BSC data sent by the first device or the network side device.

21. The method for initiating BSC link establishment according to claim 19 or 20, wherein
the BSC terminal is powered by the first device and/or the network side device.

22. An apparatus for initiating backscatter communication BSC link establishment, comprising:
a sending module, configured to send a first request to a network side device, wherein the first request is used for initiating BSC link establishment.

23. An apparatus for initiating backscatter communication BSC link establishment, comprising:
a receiving module, configured to receive a first request sent by a first device, wherein the first request is used for initiating BSC link establishment.

24. An apparatus for initiating backscatter communication BSC link establishment, comprising:
a sending module, configured to send a second request to a first device, wherein the second request is used for requesting to initiate BSC link establishment.

25. A first device, comprising a processor and a memory, wherein the memory stores programs or instructions executable on the processor, and when the programs or instructions are executed by the processor, the method for initiating backscatter communication BSC link establishment according to any one of claims 1 to 10 is implemented.

26. A network side device, comprising a processor and a memory, wherein the memory stores programs or instructions executable on the processor, and when the programs or instructions are executed by the processor, the method for initiating backscatter communication BSC link establishment according to any one of claims 11 to 18 is implemented.

27. A BSC terminal, comprising a processor and a memory, wherein the memory stores programs or instructions executable on the processor, and when the programs or instructions are executed by the processor, the method for initiating backscatter communication BSC link establishment according to any one of claims 19 to 21 is implemented.

28. A readable storage medium, wherein the readable storage medium stores programs or instructions, and when the programs or instructions are executed by a processor, the method for initiating backscatter communication BSC link establishment according to any one of claims 1 to 10 is implemented, or the method for initiating backscatter communication BSC link establishment according to any one of claims 11 to 18 is implemented, or the method for initiating backscatter communication BSC link establishment according to any one of claims 19 to 21 is implemented.
